# EUROPEAN PATENT SPECIFICATION

(11) **EP 4 397 492 B1**
(45) Date of publication and mention of the grant of the patent: **03.06.2026**
(21) Application number: 22864561.0
(22) Date of filing: 30.08.2022
(51) Int. Cl.: B32B 27/40, B65D 65/40, B32B 27/30, C08G 18/79, C08G 18/76, C08G 18/75, C08G 18/72, C08G 18/42, C08G 18/66, C08G 18/12, B32B 27/36, B32B 27/34, B32B 27/00, B32B 27/32, B32B 27/10, C09J 11/06, B32B 15/09, C09J 175/04, C09J 175/06, C09J 175/08

(54) **ADHESIVE, LAMINATE, METHOD FOR PRODUCING LAMINATE, AND PACKAGING MATERIAL**
KLEBSTOFF, LAMINAT, VERFAHREN ZUR HERSTELLUNG DES LAMINATS UND VERPACKUNGSMATERIAL
ADHÉSIF, STRATIFIÉ, PROCÉDÉ DE PRODUCTION DE STRATIFIÉ ET MATÉRIAU D'EMBALLAGE

(30) Priority: 31.08.2021 JP 2021140994
(43) Date of publication of application: 10.07.2024
(73) Proprietor: DIC Corporation, Tokyo 174-8520 (JP)
(72) Inventor: HONMA Takao, Tokyo 174-8520 (JP); TOMITA Daiki, Tokyo 174-8520 (JP); AKITA Kouji, Tokyo 174-8520 (JP); ARAI Masamitsu, Tokyo 174-8520 (JP)
(74) Representative: Kraus & Lederer PartGmbB
(86) International application number: PCT/JP2022/032579
(87) International publication number: WO 2023/032979

(56) References cited:
- WO-A1-2018/101242
- WO-A1-2019/167638
- WO-A1-2019/181921
- JP-A- 2003 129 024
- JP-A- 2019 031 603
- JP-A- 2019 031 603
- JP-A- 2019 533 034
- JP-A- 2020 045 442

## Description

### Technical Field

The present invention relates to a two-component curable adhesive, a laminate, a method for producing a laminate, and a packaging material.

### Background Art

Laminates for use in various packaging materials, labels, and the like are provided with visual quality, functionality, preservability, convenience, transportation resistance, and the like by lamination of a wide variety of base materials such as plastic films, metal foils, and paper. Packaging materials made by forming the laminate into a bag shape are used as packaging materials for food, pharmaceuticals, detergents, and the like.

Conventionally, laminates for use in packaging materials have been mainly obtained by a dry lamination system, in which an adhesive dissolved in a volatile organic solvent (may be referred to as a solvent-type laminate adhesive) is applied to a base material, the organic solvent is volatilized in a step of passing through an oven, and another base material is bonded thereto. However, in recent years, from the viewpoint of reducing environmental load and improving the work environment, demand for reactive two-component laminate adhesives that do not contain any volatile organic solvent (hereinafter, referred to as a solventless adhesive) has also been increasing (PTL 1).

### Citation List

### Patent Literature

PTL 1: Japanese Unexamined Patent Application Publication No. 2014-159548
PTL 2: Japanaese Patent Application Publication No. 2019-031603
PTL 3: International Patent Application Publication WO2019-181921
PTL 4: International Patent Application Publication WO 2019-167638

### Summary of Invention

### Technical Problem

Unlike a solvent-type adhesive, a polyisocyanate compound and a polyol compound used in the solventless adhesive must be viscous enough to enable application without being diluted with an organic solvent, which inevitably results in a lower molecular weight. However, when the molecular weight of the polyisocyanate compound and the polyol compound is reduced, the initial cohesive force also becomes smaller, causing air bubbles to remain in the adhesive, which makes the processed appearance of laminates likely to worsen.

To alleviate such defects, a polyamine compound, which has higher reactivity with the polyisocyanate compound than that of the polyol compound, may be used in combination as a component of the adhesive. The inventors of the present invention have examined such an adhesive to find that the adhesive after being stored for a certain period may have lowered initial cohesive force than that immediately after being prepared.

The present invention has been made in view of these circumstances, and an object thereof is to provide a solventless two-component curable adhesive with excellent initial cohesive force and with its reduction over time suppressed, a laminate obtained using the adhesive, a method for producing the laminate, and a packaging material. Solution to Problem

The present invention relates to a two-component curable adhesive containing an isocyanate composition (X) containing a polyisocyanate compound (A) and a polyol composition (Y) containing a polyester polyol (B), a compound (C) containing a polyoxyalkylene chain and a hydroxy group, and a polyamine (D). The polyester polyol (B) is at least one selected from the group consisting of a polyester polyol (B1) being a reaction product of a polyvalent carboxylic acid and a polyhydric alcohol, with 90% by mass or more of the polyhydric alcohol being an aliphatic diol with the number of carbon atoms of an alkyl chain linking two hydroxy groups with each other being four or more and 10 or less and a polycaprolactone polyol (B2). The ratio of the total amount of the polyester polyol (B), the compound (C), and the polyamine (D) to a solid content of the polyol composition (Y) is 90% by mass or more.

### Advantageous Effects of Invention

The present invention can provide an adhesive with excellent initial cohesive force even after being stored for a certain period and capable of suppressing worsening of processed appearance.

### Description of Embodiments

### <Adhesive>

The adhesive of the present invention is a two-component curable adhesive containing a polyisocyanate composition (X) and a polyol composition (Y). The following describes the adhesive of the present invention in detail.

### (Polyisocyanate Composition (X))

### (Polyisocyanate Compound (A))

The polyisocyanate composition (X) contains a polyisocyanate compound (A) having a plurality of isocyanate groups. The polyisocyanate compound (A) is not limited to a particular compound, and examples thereof include aromatic diisocyanates, aromatic aliphatic diisocyanates, aliphatic diisocyanates, and alicyclic diisocyanates; biuret forms, nurate forms, adduct forms, allophanate forms, carbodiimide-modified forms, and uretdione-modified forms of theses diisocyanates; and urethane prepolymers obtained by reacting these polyisocyanates and polyols, which can be used individually or in combination.

Examples of the aromatic diisocyanates include 2,2'-diphenylmethane diisocyanate, 2,4'-diphenylmethane diisocyanate, 4,4'-diphenylmethane diisocyanate, polymethylene polyphenyl polyisocyanate (also called polymeric MDI or crude MDI), 1,3-phenylene diisocyanate, 4,4'-diphenyl diisocyanate, 1,4-phenylene diisocyanate, 2,4-tolylene diisocyanate, 2,6-tolylene diisocyanate, 4,4'-toluidine diisocyanate, 2,4,6-triisocyanate toluene, 1,3,5-triisocyanate benzene, dianisidine diisocyanate, 4,4'-diphenyl ether diisocyanate, and 4,4',4"-triphenylmethane triisocyanate, but these are not limiting.

The aromatic aliphatic diisocyanate means an aliphatic isocyanate having one or more aromatic rings in the molecule, and examples thereof include m- and p-xylylene diisocyanate (also known as XDI), and α,α,α',α'-tetramethylxylylene diisocyanate (also known as TMXDI), but these are not limiting.

Examples of the aliphatic diisocyanates include trimethylene diisocyanate, tetramethylene diisocyanate, hexamethylene diisocyanate (also known as HDI), pentamethylene diisocyanate, 1,2-propylene diisocyanate, 2,3-butylene diisocyanate, 1,3-butylene diisocyanate, dodecamethylene diisocyanate, and 2,4,4-trimethylhexamethylene diisocyanate, but these are not limiting.

Examples of the alicyclic diisocyanates include 3-isocyanatomethyl-3,5,5-trimethylcyclohexyl isocyanate, isophorone diisocyanate (also known as IPDI), 1,3-cyclopentane diisocyanate, 1,3-cyclohexane diisocyanate, 1,4-cyclohexane diisocyanate, methyl-2,4-cyclohexane diisocyanate, methyl-2,6-cyclohexane diisocyanate, 4,4'-methylenebis(cyclohexyl isocyanate), and 1,4-bis(isocyanatomethyl)cyclohexane, but these are not limiting.

Examples of the polyol used in the synthesis of the urethane prepolymers include alkylene glycols such as ethylene glycol, propylene glycol, 1,3-propanediol, 1,4-butanediol, 1,5-pentanediol, 3-methyl-1,5-pentanediol, 1,6-hexanediol, neopentyl glycol, methyl pentanediol, dimethyl butanediol, butyl ethyl propanediol, 1,4-cyclohexanediol, and 1,4-cyclohexanedimethanol;
bisphenols such as bisphenol A, bisphenol F, hydrogenated bisphenol A, and hydrogenated bisphenol F;
dimer diols;
bishydroxyethoxybenzene;
polyalkylene glycols such as diethylene glycol, triethylene glycol, other polyethylene glycols, polypropylene glycol, and polybutylene glycol;
urethane bond-containing polyether polyols in which polyalkylene glycols are further increased in molecular weight with aromatic or aliphatic polyisocyanates;
polyester polyols obtained by reacting the alkylene glycols or polyalkylene glycols described above and at least one of C₂₋₁₃ aliphatic dicarboxylic acids such as oxalic acid, malonic acid, succinic acid, glutaric acid, adipic acid, fumaric acid, maleic acid, suberic acid, azelaic acid, sebacic acid, undecanedioic acid, dodecanedioic acid, and tridecanedioic acid and aromatic polyvalent carboxylic acids such as orthophthalic acid, isophthalic acid, terephthalic acid, trimellitic acid, and pyromellitic acid; and
polyester polyols as reaction products of polyesters obtained by a ring-opening polymerization reaction of cyclic ester compounds such as propiolactone, butyrolactone, ε-caprolactone, σ-valerolactone, and β-methyl-σ-valerolactone and polyhydric alcohols such as glycols, glycerin, trimethylolpropane, and pentaerythritol.

The polyisocyanate compound (A) preferably contains a urethane prepolymer as a reaction product of a diisocyanate and at least one selected from a polyester polyol and a polyether polyol. The diisocyanate preferably contains aromatic diisocyanates and more preferably 2,4'-diphenylmethane diisocyanate and/or 4,4'-diphenylmethane diisocyanate. The number average molecular weight of the polyester polyol is preferably 300 or more and 3,000 or less. The number average molecular weight of the polyether polyol is preferably 300 or more and 3,000 or less.

Alternatively, the polyisocyanate compound (A) also preferably contains a nurate form of an aliphatic diisocyanate or an alicyclic diisocyanate.

The isocyanate composition (X) has a viscosity at 50°C of preferably 300 mPa·s or more and 10,000 mPa·s or less and more preferably 450 mPa·s or more and 8,000 mPa·s or less. This makes it easier to provide a laminate with better appearance. The viscosity of the polyisocyanate composition (X) in the present application is a value measured using a rotational viscometer with cone and plate: 1° × 50 mm in diameter, shear rate: 100 sec⁻¹, and 50°C ± 1°C. The viscosity of the isocyanate composition (X) can be adjusted by the polyisocyanate compound (A1) used and its blending amount.

### (Polyol Composition (Y))

The polyol composition (Y) contains a polyester polyol (B), a compound (C) containing a polyoxyalkylene chain and a hydroxy group, and a polyamine (D).

### (Polyester Polyol (B))

The polyester polyol (B) contains at least one selected from the group consisting of a polyester polyol (B1) as a reaction product of a polyhydric alcohol and a polyvalent carboxylic acid and a polycaprolactone polyol (B2). 90% by mass or more of the polyhydric alcohol as a synthesis raw material of the polyester polyol (B1) is an aliphatic diol with the number of carbon atoms of an alkyl chain linking two hydroxy groups with each other being four or more and 10 or less. The entire amount of the polyhydric alcohol may be such an aliphatic diol. The number of carbon atoms of an alkyl chain linking two hydroxy groups with each other does not include the number of carbon atoms in a side chain.

Examples of the aliphatic diol with the number of carbon atoms of an alkyl chain linking two hydroxy groups with each other being four or more and six or less for use in the synthesis of the polyester polyol (B1) include 1,4-butanediol, 1,5-pentanediol, 1,6-hexanediol, 3-methyl-1,5-pentanediol, and 1,9-nonanediol, but these are not limiting. These aliphatic diols may be used individually or in combination.

The polyhydric alcohol as a raw material of the polyester polyol (B1) may contain polyols other than the aliphatic diol described above. Such polyols may be diols or tri- or more functional polyols, and examples of the diols include aliphatic diols such as ethylene glycol, diethylene glycol, propylene glycol, 1,3-propanediol, 1,2,2-trimethyl-1,3-propanediol, 2,2-dimethyl-3-isopropyl-1,3-propanediol, 1,3-butanediol, 3-methyl-1,3-butanediol, neopentyl glycol, 1,4-bis(hydroxymethyl)cyclohexane, and 2,2,4-trimethyl-1,3-pentanediol;
ether glycols such as polyoxyethylene glycol and polyoxypropylene glycol;
modified polyether diols obtained by ring-opening polymerization of aliphatic diols and various cyclic ether bond-containing compounds such as ethylene oxide, propylene oxide, tetrahydrofuran, ethyl glycidyl ether, propyl glycidyl ether, butyl glycidyl ether, phenyl glycidyl ether, and allyl glycidyl ether;
lactone-based polyester polyols obtained by a polycondensation reaction of aliphatic diols and various lactones such as lactide and ε-caprolactone;
bisphenols such as bisphenol A and bisphenol F: and
alkylene oxide adducts of bisphenols obtained by adding ethylene oxide, propylene oxide, and the like to bisphenols such as bisphenol A and bisphenol F.

Examples of the tri- or more functional polyols include aliphatic polyols such as trimethylolethane, trimethylolpropane, glycerin, hexanetriol, and pentaerythritol;
modified polyether polyols obtained by ring-opening polymerization of aliphatic polyols and various cyclic ether bond-containing compounds such as ethylene oxide, propylene oxide, tetrahydrofuran, ethyl glycidyl ether, propyl glycidyl ether, butyl glycidyl ether, phenyl glycidyl ether, and allyl glycidyl ether; and
lactone-based polyester polyols obtained by a polycondensation reaction of aliphatic polyols and various lactones such as ε-caprolactone.

Examples of the polyvalent carboxylic acid used for the synthesis of the polyester polyol (B) include aliphatic dicarboxylic acids such as succinic acid, adipic acid, azelaic acid, sebacic acid, dodecanedicarboxylic acid, maleic anhydride, fumaric acid, 1,3-cyclopentanedicarboxylic acid, and 1,4-cyclohexanedicarboxylic acid; aliphatic polycarboxylic acids such as dimer acid; anhydrides and ester-forming derivatives of these aliphatic polyvalent carboxylic acids;
aromatic dicarboxylic acids such as ortho-phthalic acid, isophthalic acid, terephthalic acid, 1,4-naphthalene dicarboxylic acid, 2,5-naphthalene dicarboxylic acid, 2,6-naphthalene dicarboxylic acid, naphthalic acid, biphenyldicarboxylic acid, and 1,2-bis(phenoxy)ethane-p,p'-dicarboxylic acid; aromatic polycarboxylic acids such as trimellitic acid and pyromellitic acid; and anhydrides and ester-forming derivatives of these aromatic polyvalent carboxylic acids.

The number-average molecular weight of the polyester polyol (B1), which is not limited to a particular value, is preferably 300 or more and 4,000 or less as an example. The number-average molecular weight (Mn) in the present specification is a value measured by gel permeation chromatography (GPC) under the following conditions.

Measurement apparatus: HLC-8320GPC manufactured by Tosoh Corporation
Column: TSKgel 4000HXL, TSKgel 3000HXL, TSKgel 2000HXL, and TSKgel 1000HXL manufactured by Tosoh Corporation
Detector: RI (a differential refractometer)
Data processing: Multi Station GPC-8020 model II manufactured by Tosoh Corporation
Measurement conditions: Column temperature: 40°C
   Solvent: Tetrahydrofuran
   Flow rate: 0.35 ml/minute
Standard: Monodispersed polystyrene
Sample: A 0.2%-by-mass tetrahydrofuran solution in terms of resin solid content filtered through a microfilter (100 µl)

The polycaprolactone polyol (B2) is obtained by a polycondensation reaction of an aliphatic diol or polyol and ε-caprolactone.

The number-average molecular weight of the polycaprolactone polyol, which is not limited to a particular value, is preferably 300 or more and 4,000 or less as an example.

The viscosity at 50°C of the polyester polyol (B) is preferably 50 mPa·s or more and 10,000 mPa·s or less and more preferably 100 mPa·s or more and 5,000 mPa·s or less.

Examples of the compounds (C) containing a polyoxyalkylene chain and a hydroxy group include a polyether polyol (C1) and a polyoxyalkylene monool (C2).

Examples of the polyether polyol (C1) include glycols such as ethylene glycol, propylene glycol, 1,3-propanediol, 1,4-butanediol, 1,5-pentanediol, 3-methyl-1,5-pentanediol, 1,6-hexanediol, neopentyl glycol, methyl pentanediol, dimethyl butanediol, butyl ethyl propanediol, diethylene glycol, triethylene glycol, tetraethylene glycol, dipropylene glycol, tripropylene glycol, bishydroxyethoxybenzene, 1,4-cyclohexanediol, 1,4-cyclohexanedimethanol, and triethylene glycol; and addition polymerized products of alkylene oxides such as ethylene oxide, propylene oxide, butylene oxide, styrene oxide, epichlorohydrin, tetrahydrofuran, and cyclohexylene in the presence of polymerization initiators such as trifunctional or tetrafunctional aliphatic alcohols such as glycerin, trimethylolpropane, pentaerythritol, and a triol form of polypropylene glycol. Polypropylene polyols are preferably used.

The number-average molecular weight of the polyether polyol (C1), which is not limited to a particular value, is preferably 300 or more and 4,000 or less as an example.

Examples of the polyoxyalkylene monool (C2) include ring-opening addition polymerized products of alkylene oxides such as ethylene oxide, propylene oxide, butylene oxide, and tetrahydrofuran using alkyl compounds containing one active hydrogen or the like as an initiator.

### (Polyamine (D))

The polyamine (D) has a plurality of amino groups (an NH₂ group or an NHR group (R is an alkyl group or an aryl group that may have a functional group)). As the polyamine (D), known ones can be used without particular limitations, and examples thereof include methylenediamine, ethylenediamine, isophoronediamine, 3,9-dipropanamine-2,4,8,10-tetraoxaspiroundecane, lysine, phenylenediamine, 2,2,4-trimethylhexamethylenediamine, tolylenediamine, hydrazine, piperazine, hexamethylenediamine, propylenediamine, dicyclohexylmethane-4,4-diamine, 2-hydroxyethylethylenediamine, di-2-hydroxyethylethylenediamine, di-2-hydroxyethylpropylenediamine, 2-hydroxypropylethylenediamine, di-2-hydroxypropylethylenediamine, polyoxyalkylene polyamines such as polyoxyethylenediamine, polyoxyethylenetriamine, polyoxyethylenetetraamine, polyoxypropylenediamine, polyoxypropylenetriamine, and polyoxypropylenetetraamine, 1,2-diaminopropane, 1,3-diaminopropane;
1,4-diaminobutane, 1,5-diaminopentane, 1-6-diaminohexane, 1,7-diaminoheptane, 1,8-diaminooctane, 1,9-diaminononane, 1,10-diaminodecane, etc., benzylamine, diethylenetriamine, dipropylenetriamine, triethylenetetramine, tripropylenetetramine, tetraethylene pentamine, tetrapropylene pentamine, pentaethylene hexamine, nonaethylene decamine, trimethylhexamethylenediamine, etc., tetra(aminomethyl)methane, tetrakis(2-aminoethylaminomethyl)methane, 1,3-bis(2'-aminoethylamino)propane, triethylene-bis(trimethylene)hexamine, bis(3-aminoethyl)amine, bis(hexamethylene)triamine, etc., 1,4-cyclohexanediamine, 4,4'-methylenebiscyclohexylamine, 4,4'-isopropylidenebiscyclohexylamine, norbornadiamine,
bis(aminomethyl)cyclohexane, diaminodicyclohexylmethane, isophoronediamine, menthenediamine, etc., bis(aminoalkyl)benzene, bis(aminoalkyl)naphthalene, bis(cyanoethyl)diethylenetriamine, ortho-xylylenediamine, meta-xylylenediamine, para-xylylenediamine, phenylenediamine, naphthylenediamine, diaminodiphenylmethane, diaminodiethylphenylmethane, 2,2-bis(4-aminophenyl)propane, 4,4'-diaminodiphenyl ether, 4,4'-diaminobenzophenone, 4,4'-diaminodiphenyl ether, 4,4'-diaminodiphenyl sulfone, 2,2'-dimethyl-4,4'-diaminodiphenylmethane, 2,4'-diaminobiphenyl, 2,3'-dimethyl-4,4'-diaminobiphenyl, 3,3'-dimethoxy-4,4'-diaminobiphenyl, bis(aminomethyl)naphthalene, bis(aminoethyl)naphthalene, etc., N-methylpiperazine, morpholine, 1,4-bis-(8-aminopropyl)-piperazine, piperazine-1,4-diazacycloheptane, 1-(2'-aminoethylpiperazine), 1-[2'-(2"-aminoethylamino)ethyl]piperazine, tricyclodecanediamine, and amine compounds having a plurality of amino groups such as polyurea amines as reaction products of the various kinds of polyamines described above and the various kinds of isocyanate components described above, which can be used individually or in combination.

From the viewpoint of the balance among adhesion to metal base materials, the appearance of the laminate, and pot life, the blending amount of the polyamine (D) is preferably adjusted such that the polyol composition (Y) immediately after blending has an amine value of 1 mgKOH/g or more and 100 mgKOH/g or less and is more preferably blended such that the polyol composition (Y) immediately after blending has an amine value of 10 mgKOH/g or more and 80 mgKOH/g or less. This allows the adhesive to have better processed appearance.

The amine value in the present specification means the number of milligrams of KOH that is equivalent to the amount of HCl required to neutralize 1 g of a sample and can be calculated using known methods without particular limitations. When the chemical structure of the polyamine (D) and, if necessary, the average molecular weight and the like thereof are known, the amine value can be calculated from (the number of amino groups per molecule/the average molecular weight) × 56.1 × 1,000. When the chemical structure, the average molecular weight, and the like of the polyamine (D) are unknown, the amine value can be measured in accordance with known methods for measuring an amine value such as JIS K7237-1995.

In the adhesive of the present invention, the ratio of the total amount of the polyester polyol (B), the polyether polyol (C), and the polyamine (D) to the solid content of the polyol composition (Y) is 90% by mass or more. This allows the adhesive to have excellent processed appearance and to maintain its effectiveness even after being stored for a certain period.

Because of being the adhesive having excellent processed appearance and laminate strength, the blending amount of the polyester polyol (B) in the solid content of the polyol composition (Y) is preferably 10% by mass or more and 80% by mass or less. The blending amount of the polyether polyol (C) in the solid content of the polyol composition (Y) is preferably 15% by mass or more and 80% by mass or less.

The polyol composition (Y) may contain a compound (E) having active hydrogen groups other than the polyester polyol (B), the polyether polyol (C), and the polyamine (D). Examples of such active hydrogen compounds include a polyester polyol (E1) other than the polyester polyol (B), a vegetable oil polyol (E2), and an amine compound (E3) having a plurality of hydroxy groups. However, the ratio of the compound (E) to the polyol composition (Y) is 10% by mass or less. The polyol composition does not necessarily contain the compound (E) having these active hydrogen groups.

As the polyhydric alcohol and the polyvalent carboxylic acid as the raw materials of the polyester polyol (E1), the same as those exemplified as the raw materials of the polyester polyol (B) can be used.

Examples of the vegetable oil polyol (E2) include castor oil, dehydrated castor oil, hardened castor oil as a hydrogenated product of castor oil, and 5 to 50 mol alkylene oxide adducts of castor oil.

Examples of the amine compound (E3) having a plurality of hydroxy groups include polypropylene glycol ethylenediamine ether, propylene oxide adducts of triethanolamine, N-ethyl diethanolamine, N-methyl-N-hydroxyethyl-N-hydroxyethoxyethylamine, pentakis(hydroxypropyl)diethylenetriamine, tetrakis(hydroxypropyl)ethylenediamine, N,N,N',N'-tetrakis(2-hydroxypropyl)ethylenediamine, triethanolamine, and amino group-containing aspartates. The hydroxy groups of the amine compound (E3) having a plurality of hydroxy groups are preferably secondary or tertiary ones.

The polyol composition (Y) preferably has a viscosity at 50°C of 50 mPa·s or more and 500 mPa·s or less.

### (Other Components of Adhesive)

The adhesive of the present invention may contain components other than the components described above. The other components may be contained in either the polyisocyanate composition (X) or the polyol composition (Y) or both, or they may be prepared separately from the compositions and mixed together with the polyisocyanate composition (X) and the polyol composition (Y) immediately before the adhesive is applied. The following describes each component.

### (Urethane-Forming Catalyst)

Examples of a urethane-forming catalyst include metal-based catalysts, amine-based catalysts, and aliphatic cyclic amide compounds.

Examples of the metal-based catalysts include metal complex-based, inorganic metal-based, and organometal-based catalysts. Examples of the metal complex-based catalysts include acetylacetonate salts of a metal selected from the group consisting of Fe (iron), Mn (manganese), Cu (copper), Zr (zirconium), Th (thorium), Ti (titanium), Al (aluminum), and Co (cobalt); examples thereof include iron acetylacetonate, manganese acetylacetonate, copper acetylacetonate, and zirconia acetylacetonate.

Examples of the inorganic metal-based catalysts include those selected from Sn, Fe, Mn, Cu, Zr, Th, Ti, Al, Co, and the like.

Examples of the organometal-based catalysts include organozinc compounds such as zinc octylate, zinc neodecanoate, and zinc naphthenate; organotin compounds such as stannous diacetate, stannous dioctoate, stannous dioleate, stannous dilaurate, dibutyltin diacetate, dibutyltin dilaurate, dioctyltin dilaurate, dibutyltin oxide, and dibutyltin dichloride; organonickel compounds such as nickel octylate and nickel naphthenate; organocobalt compounds such as cobalt octylate and cobalt naphthenate; organobismuth compounds such as bismuth octylate, bismuth neodecanoate, and bismuth naphthenate; and titanium-based compounds such as tetraisopropyloxy titanate, dibutyltitanium dichloride, tetrabutyl titanate, butoxytitanium trichloride, and titanium chelate complexes with at least one of aliphatic diketones, aromatic diketones, and C₂₋₁₀ alcohols as a ligand.

Examples of the amine-based catalysts include triethylenediamine, 2-methyl triethylenediamine, quinuclidine, 2-methyl quinuclidine, N,N,N',N'-tetramethylethylenediamine, N,N,N',N'-tetramethylpropylenediamine, N,N,N',N",N"-pentamethyldiethylenetriamine, N,N,N',N",N"-pentamethyl-(3-aminopropyl)ethylenediamine, N,N,N',N",N"-pentamethyldipropylenetriamine, N,N,N',N'-tetramethylhexamethylenediamine, bis(2-dimethylaminoethyl)ether, dimethylethanolamine, dimethylisopropanolamine, dimethylaminoethoxyethanol, N,N-dimethyl-N'-(2-hydroxyethyl)ethylenediamine, N,N-dimethyl-N'-(2-hydroxyethyl)propanediamine, bis(dimethylaminopropyl)amine, bis(dimethylaminopropyl)isopropanolamine, 3-quinuclidinol, N,N,N',N'-tetramethylguanidine, 1,3,5-tris(N,N-dimethylaminopropyl)hexahydro-S-triazine, 1,8-diazabicyclo[5.4.0]undec-7-ene, N-methyl-N'-(2-dimethylaminoethyl)piperazine, N,N'-dimethylpiperazine, dimethylcyclohexylamine, N-methylmorpholine, N-ethylmorpholine, 1-methylimidazole, 1,2-dimethylimidazole, 1-isobutyl-2-methylimidazole, 1-dimethylaminopropylimidazole, N,N-dimethylhexanolamine, N-methyl-N'-(2-hydroxyethyl)piperazine, 1-(2-hydroxyethyl)imidazole, 1-(2-hydroxypropyl)imidazole, 1-(2-hydroxyethyl)-2-methylimidazole, and 1-(2-hydroxypropyl)-2-methylimidazole.

Examples of the aliphatic cyclic amide compounds include δ-valerolactam, ε-caprolactam, ω-enantholactam, η-capryllactam, and β-propiolactam. Among these, ε-caprolactam is more effective in promoting curing.

The organometal-based catalyst is preferably used, at least one selected from the organozinc compound, the organotin compound, and the organobismuth compound is preferably used, and the organotin compound is preferred. The blending amount of the organometal-based catalyst is preferably 0.005% by mass or more and 1.0% by mass or less of the entire amount of the adhesive. When the organometal-based catalyst is the organozinc compound, its blending amount is preferably 0.05% by mass or more and 1.0% by mass or less of the entire amount of the adhesive. When the organometal-based catalyst is the organotin compound, its blending amount is preferably 0.005% by mass or more and 0.5% by mass or less of the entire amount of the adhesive. When the organometal-based catalyst is the organobismuth compound, its blending amount is preferably 0.05% by mass or more and 1.0% by mass or less of the entire amount of the adhesive.

### (Acid Anhydride)

Examples of an acid anhydride include cyclic aliphatic acid anhydrides, aromatic acid anhydrides, and unsaturated carboxylic acid anhydrides, which can be used individually or in combination. More specific examples thereof include phthalic anhydride, trimellitic anhydride, pyromellitic anhydride, benzophenone tetracarboxylic anhydride, dodecenyl succinic anhydride, polyadipic anhydride, polyazelaic anhydride, polysebacic anhydride, poly(ethyl octadecanedioic) anhydride, poly(phenylhexadecanedioic) anhydride, tetrahydrophthalic anhydride, methyl tetrahydrophthalic anhydride, methyl hexahydrophthalic anhydride, hexahydrophthalic anhydride, methyl himic anhydride, trialkyltetrahydrophthalic anhydride, methylcyclohexene dicarboxylic anhydride, methylcyclohexene tetracarboxylic anhydride, ethylene glycol bis-trimellitate dianhydride, het anhydride, nadic anhydride, methylnadic anhydride, 5-(2,5-dioxotetrahydro-3-furanyl)-3-methyl-3-cyclohexane-1,2-dicarboxylic anhydride, 3,4-dicarboxy-1,2,3,4-tetrahydro-1-naphthalene succinic dianhydride, and 1-methyl-dicarboxy-1,2,3,4-tetrahydro-1-naphthalene succinic dianhydride.

As the acid anhydride, compounds obtained by modifying the compounds described above with glycols may be used. Examples of the glycols that can be used for modification include alkylene glycols such as ethylene glycol, propylene glycol, and neopentyl glycol; and polyether glycols such as polyethylene glycol, polypropylene glycol, and polytetramethylene ether glycol. Further, copolymerized polyether glycols of two or more of these glycols and/or polyether glycols can also be used.

### (Coupling Agent)

Examples of a coupling agent include silane coupling agents, titanate coupling agents, and aluminum coupling agents.

Examples of the silane coupling agents include aminosilanes such as γ-aminopropyltriethoxysilane, γ-aminopropyltrimethoxysilane, N-β(aminoethyl)-γ-aminopropyltrimethoxysilane, N-β(aminoethyl)-γ-aminopropyltrimethyldimethoxysilane, and N-phenyl-γ-aminopropyltrimethoxysilane; epoxysilanes such as β-(3,4-epoxycyclohexyl)ethyltrimethoxysilane, γ-glycidoxypropyltrimethoxysilane, and γ-glycidoxypropyltriethoxysilane; vinylsilanes such as vinyltris(β-methoxyethoxy)silane, vinyltriethoxysilane, vinyltrimethoxysilane, and γ-methacryloxypropyltrimethoxysilane; hexamethyldisilazane; and γ-mercaptopropyltrimethoxysilane.

Examples of the titanate coupling agents include tetraisopropoxy titanium, tetra-n-butoxy titanium, butyl titanate dimer, tetrastearyl titanate, titanium acetylacetonate, titanium lactate, tetraoctylene glycol titanate, titanium lactate, and tetrastearoxy titanium.

Examples of the aluminum coupling agents include acetoalkoxyaluminum diisopropylate.

### (Pigment)

The pigments are not limited to particular pigments; examples thereof include organic pigments and inorganic pigments such as extender pigments, white pigments, black pigments, gray pigments, red pigments, brown pigments, green pigments, blue pigments, metallic powder pigments, luminescent pigments, and pearl pigments and plastic pigments described in the 1970 edition of the Handbook of Raw Materials for Coatings (edited by Japan Paint Manufacturers Association).

Examples of the extender pigments include sedimented barium sulfate, powdered calcium carbonate, sedimented calcium carbonate, calcium bicarbonate, white limestone, alumina white, silica, hydrous fine silica (white carbon), ultrafine anhydrous silica (Aerosil), silica sand, talc, sedimented magnesium carbonate, bentonite, clay, kaolin, and ocher.

Specific examples of the organic pigments include various kinds of insoluble azo pigments such as Benzidine Yellow, Hansa Yellow, and Lake Red 4R; soluble azo pigments such as Lake Red C, Carmine 6B, and Bordeaux 10; various kinds of (copper) phthalocyanine pigments such as phthalocyanine blue and phthalocyanine green; various kinds of basic dyeing lakes such as rhodamine lake and methyl violet lake; various kinds of mordant dye pigments such as quinoline lake and fast sky blue; various kinds of vat dyeing pigments such as anthraquinone pigments, thioindigo pigments, and perinone pigments; various kinds of quinacridone pigments such as Cinquasia Red B; various kinds of dioxazine pigments such as dioxazine violet; various kinds of condensed azo pigments such as Cromophtal; and aniline black.

Examples of the inorganic pigments include various kinds of chromates such as chrome yellow, zinc chromate, and molybdate orange; various kinds of ferrocyanides such as dark blue; various kinds of metal oxides such as titanium oxide, zinc white, Mapico Yellow, iron oxide, red iron oxide, chrome oxide green, and zirconium oxide; various kinds of sulfides and selenides such as cadmium yellow, cadmium red, and mercury sulfide; various kinds of sulfates such as barium sulfate and lead sulfate; various kinds of silicates such as calcium silicate and ultramarine blue; various kinds of carbonates such as calcium carbonate and magnesium carbonate; various kinds of phosphates such as cobalt violet and manganese violet; various kinds of metallic power pigments such as aluminum powder, gold powder, silver powder, copper powder, bronze powder, and brass powder; flake pigments of these metals and mica flake pigments; metallic pigments and pearl pigments such as mica flake pigments in the form of being covered with metal oxides and mica-like iron oxide pigments; and graphite and carbon black.

Examples of the plastic pigments include "Grandol PP-1000" and "PP-2000S" manufactured by DIC Corporation.

The pigment used may be selected as appropriate in accordance with a purpose. For example, inorganic oxides such as titanium oxide and zinc white are preferably used as a white pigment and carbon black is preferably used as a black pigment because of excellence in durability, weatherability, and visual quality.

The blending amount of the pigment is, as an example, 1 to 400 parts by mass with respect to 100 parts by mass of the total nonvolatile content of the polyol composition (X) and the polyisocyanate composition (Y) and more preferably 10 to 300 parts by mass for better adhesion and blocking resistance.

### (Plasticizer)

Examples of the plasticizers include phthalic acid-based plasticizers, fatty acid-based plasticizers, aromatic polycarboxylic acid-based plasticizers, phosphoric acid-based plasticizers, polyol-based plasticizers, epoxy-based plasticizers, polyester-based plasticizers, and carbonate-based plasticizers.

Examples of the phthalic acid-based plasticizers include phthalate-based plasticizers such as dimethyl phthalate, diethyl phthalate, dibutyl phthalate, diisobutyl phthalate, dihexyl phthalate, diheptyl phthalate, di-(2-ethylhexyl) phthalate, di-n-octyl phthalate, dinonyl phthalate, diisononyl phthalate, didecyl phthalate, diisodecyl phthalate, ditridecyl phthalate, diundecyl phthalate, dilauryl phthalate, distearyl phthalate, diphenyl phthalate, dibenzyl phthalate, butyl benzyl phthalate, dicyclohexyl phthalate, octyldecyl phthalate, dimethyl isophthalate, di-(2-ethylhexyl)isophthalate, and diisooctyl isophthalate and tetrahydrophthalate-based plasticizers such as di-(2-ethylhexyl)tetrahydrophthalate, di-n-octyl tetrahydrophthalate, and diisodecyl tetrahydrophthalate.

Examples of the fatty acid-based plasticizers include adipic acid-based plasticizers such as di-n-butyl adipate, di-(2-ethylhexyl)adipate, diisodecyl adipate, diisononyl adipate, di(C6-C10 alkyl)adipate, and dibutyl diglycol adipate; azelaic acid-based plasticizers such as di-n-hexyl azelate, di-(2-ethylhexyl)azelate, and diisooctyl azelate; sebacic acid-based plasticizers such as di-n-butyl sebacate, di-(2-ethylhexyl)sebacate, and diisononyl sebacate; maleic acid-based plasticizers such as dimethyl malate, diethyl malate, di-n-butyl malate, and di-(2-ethylhexyl) malate, fumaric acid-based plasticizers such as di-n-butyl fumarate and di-(2-ethylhexyl) fumarate; itaconic acid-based plasticizers such as monomethyl itaconate, monobutyl itaconate, dimethyl itaconate, diethyl itaconate, dibutyl itaconate, and di-(2-ethylhexyl) itaconate; stearic acid-based plasticizers such as n-butyl stearate, glycerin monostearate, and diethylene glycol distearate; oleic acid-based plasticizers such as butyl oleate, glyceryl monooleate, and diethylene glycol monooleate; citric acid-based plasticizers such as triethyl citrate, tri-n-butyl citrate, acetyl triethyl citrate, acetyl tributyl citrate, and acetyl tri-(2-ethylhexyl) citrate; ricinoleic acid-based plasticizers such as methyl acetyl ricinolate, butyl acetyl ricinolate, glyceryl monoricinolate, and diethylene glycol monoricinolate; and other fatty acid-based plasticizers such as diethylene glycol monolaurate, diethylene glycol dipelargonate, and pentaerythritol fatty acid esters.

Examples of the aromatic polycarboxylic acid-based plasticizers include trimellitic acid-based plasticizers such as tri-n-hexyl trimellitate, tri-(2-ethylhexyl) trimellitate, tri-n-octyl trimellitate, triisooctyl trimellitate, triisononyl trimellitate, tridecyl trimellitate, and triisodecyl trimellitate and pyromellitic acid-based plasticizers such as tetra-(2-ethylhexyl) pyromellitate and tetra-n-octyl pyromellitate.

Examples of the phosphoric acid-based plasticizers include triethyl phosphate, tributyl phosphate, tri-(2-ethylhexyl) phosphate, tributoxyethyl phosphate, triphenyl phosphate, octyl diphenyl phosphate, cresyl diphenyl phosphate, cresyl phenyl phosphate, tricresyl phosphate, trixylenyl phosphate, tris(chloroethyl) phosphate, tris(chloropropyl) phosphate, tris(dichloropropyl) phosphate, and tris(isopropylphenyl) phosphate.

Examples of the polyol-based plasticizers include glycol-based plasticizers such as diethylene glycol dibenzoate, dipropylene glycol dibenzoate, triethylene glycol dibenzoate, triethylene glycol di-(2-ethyl butyrate), triethylene glycol di-(2-ethyl hexanoate), and dibutyl methylene bis-thioglycolate; and glycerin-based plasticizers such as glycerol monoacetate, glycerol triacetate, and glycerol tributyrate.

Examples of the epoxy-based plasticizers include epoxidized soybean oil, epoxy butyl stearate, di-2-ethylhexyl epoxy hexahydrophthalate, diisodecyl epoxy hexahydrophthalate, epoxy triglyceride, epoxidized octyl oleate, and epoxidized decyl oleate.

Examples of the polyester-based plasticizers include adipic acid-based polyesters, sebacic acid-based polyesters, and phthalic acid-based polyesters.

Examples of the carbonate-based plasticizers include propylene carbonate and ethylene carbonate.

Other examples of the plasticizers include partially hydrogenated terphenyls, adhesive plasticizers, and polymerizable plasticizers such as diallyl phthalate and acrylic monomers and oligomers. These plasticizers can be used individually or in combination.

### (Phosphoric Acid Compound)

Examples of a phosphoric acid compound include phosphoric acid, pyrophosphoric acid, triphosphoric acid, methyl acid phosphate, ethyl acid phosphate, butyl acid phosphate, dibutyl phosphate, 2-ethylhexyl acid phosphate, bis(2-ethylhexyl) phosphate, isododecyl acid phosphate, butoxyethyl acid phosphate, oleyl acid phosphate, tetracosyl acid phosphate, 2-hydroxyethyl methacrylate acid phosphate, and polyoxyethylene alkyl ether phosphate.

### (Hydroxycarboxylic Acid)

It is also preferred to contain at least one selected from the group consisting of 2,2-dimethylolacetic acid, 2,2-dimethylolpropionic acid, 2,2-dimethylolbutanoic acid, and 2,2-dimethylolpentanoic acid because they provide good adhesion to metal base materials. The blending amount of the hydroxycarboxylic acid is preferably 0.1% by mass or more and more preferably 0.5% by mass or more and preferably 10% by mass or less and more preferably 2.5% by mass or less of the polyol composition (Y).

### (Form of Adhesive)

The adhesive of the present invention is used in the form of the solventless type. In the present specification, the "solventless" adhesive refers to a form of an adhesive in which the polyisocyanate composition (X) and the polyol composition (Y) do not substantially contain highly dissolvable organic solvents such as esters such as ethyl acetate, butyl acetate, and cellosolve acetate; ketones such as acetone, methyl ethyl ketone, isobutyl ketone, and cyclohexanone; ethers such as tetrahydrofuran and dioxane; aromatic hydrocarbons such as toluene and xylene; halogenated hydrocarbons such as methylene chloride and ethylene chloride; dimethyl sulfoxide, and dimethyl sulfonamide, especially ethyl acetate or methyl ethyl ketone and the form that is used for a method of applying the adhesive to a base material, which is then bonded to another base material without undergoing a step of heating in an oven or the like to volatilize the solvent, or what is called nonsolvent lamination. When the organic solvent used as the reaction medium during production of the components of the polyisocyanate composition (X) or the polyol composition (Y) or the raw materials thereof has not completely been removed, and a minute amount of the organic solvent is left in the polyisocyanate composition (X) or the polyol composition (Y), it is understood that the polyisocyanate composition (X) or the polyol composition (Y) does not substantially contain the organic solvent. When the polyol composition (Y) contains a low molecular weight alcohol, the low molecular weight alcohol reacts with the polyisocyanate composition (X) to become part of the coating film and is thus not required to be volatilized after application. Thus, such a form is also treated as the solventless adhesive, and the low molecular weight alcohol is not regarded as the organic solvent.

The adhesive of the present invention is preferably blended and used such that the ratio of the amount by mole [NCO] of isocyanate groups contained in the polyisocyanate composition (X) to the amount by mole of active hydrogen groups (hydroxy groups and amino groups) contained in the polyol composition (Y), that is, [NCO]/[OH + NH] is 1.0 to 3.0. This can provide appropriate curability without depending on ambient humidity during application.

### <Laminate>

The adhesive of the present invention can be suitably used for production of a laminate. Such a laminate is obtained by bonding a plurality of base materials (film or paper) together using the adhesive described above.

There are no particular limitations on the film to be used, and a film according to uses can be selected as appropriate. Examples thereof for food packaging include polyethylene terephthalate (PET) films, polystyrene films, polyamide films, polyacrylonitrile films, polyethylene films (LLDPE: low-density polyethylene films, HDPE: high-density polyethylene films, MDOPE: uniaxially oriented polyethylene films, and OPE: biaxially oriented polyethylene films); and polyolefin films, polyvinyl alcohol films, and ethylene-vinyl alcohol copolymer films such as gas barrier films including an olefin-based heat seal resin layer on one face or both faces of resin having gas barrier properties such as polypropylene films (CPP: cast polypropylene films and OPP: biaxially oriented polypropylene films), ethylene-vinyl alcohol copolymer, and polyvinyl alcohol.

Biomass films formed of materials containing biomass-derived components are also preferably used. The biomass films are available from various companies, and for example, sheets such as those listed in the list of certified biomass products described in the Japan Organic Resources Association can be used.

Examples of specifically well-known biomass films include ones made from biomass-derived ethylene glycol. The biomass-derived ethylene glycol is made from ethanol produced from biomass (biomass ethanol). For example, the biomass-derived ethylene glycol can be obtained from the biomass ethanol by a method of producing ethylene glycol via ethylene oxide by conventionally known methods. Commercially available biomass ethylene glycol may also be used. For example, biomass ethylene glycol commercially available from India Glycols Limited. can be suitably used.

For example, as an alternative to conventional polyethylene terephthalate films made from petroleum-based raw materials, known are films containing biomass polyester, biomass polyethylene terephthalate, and the like with the biomass-derived ethylene glycol as a diol unit and with a fossil fuel-derived dicarboxylic acid as a dicarboxylic acid unit.

For the dicarboxylic acid unit of the biomass polyester, fossil fuel-derived dicarboxylic acids are used. As the dicarboxylic acids, aromatic dicarboxylic acids, aliphatic dicarboxylic acids, and derivatives thereof can be used without limitations.

In addition to the diol component and the dicarboxylic acid component, it may be a copolymerized polyester with a copolymerization component added as a third component such as at least one polyfunctional compound selected from the group consisting of bifunctional oxycarboxylic acids, in order to form a cross-linked structure, tri- or more functional polyhydric alcohols, tri- or more functional polyvalent carboxylic acids and/or anhydrides thereof, and tri-or more functional oxycarboxylic acids.

For example, as an alternative to conventional polyolefin-based films made from petroleum-based raw materials, also known are biomass polyolefin-based films such as biomass polyethylene-based films and biomass polyethylene-polypropylene-based films containing polyethylene-based resins made from the biomass-derived ethylene glycol.

The polyethylene-based resins are not limited to particular resins except for the use of the biomass-derived ethylene glycol as part of the raw material, and examples thereof include ethylene monopolymers and copolymers of ethylene and α-olefins with ethylene as the main component (ethylene-α-olefin copolymers containing 90% by mass or more of an ethylene unit), which can be used individually or in combination.

The α-olefins forming the copolymers of ethylene and α-olefins are not limited to particular α-olefins, and examples thereof include C₄₋₈ α-olefins such as 1-butene, 4-methyl-1-pentene, 1-hexene, and 1-octene. Known polyethylene resins such as low-density polyethylene resins, medium-density polyethylene resins, and linear low-density polyethylene resins can be used. Among them, from the viewpoint of making it more resistant to damage such as holes and tears even when the films rub against each other, linear low-density polyethylene resins (LLDPE) (a copolymer of ethylene and 1-hexene or a copolymer of ethylene and 1-octene) are preferred, and linear low-density polyethylene resins with a density of 0.910 to 0.925 g/cm³ are more preferred.

As the biomass films, ones containing biomass raw materials distinguished by their biomass plastic degree as specified by ISO 16620 or ASTM D6866 are also distributed. In the atmosphere, radiocarbon 14C is present at a rate of 1 in 1,012, and this rate remains unchanged in carbon dioxide in the atmosphere, and thus this rate remains unchanged even in plants fixing this carbon dioxide by photosynthesis. Thus, carbon in plant-derived resins contains radiocarbon 14C. In contrast, carbon in fossil fuel-derived resins contains little radiocarbon 14C. Given these circumstances, by measuring the concentration of radiocarbon 14C in a resin with an accelerator mass spectrometer, the content ratio of the plant-derived resins in the resin, that is, the biomass plastic degree can be determined.

Examples of plant-derived low-density polyethylenes as biomass plastics having a biomass plastic degree specified by ISO 16620 or ASTM D6866 of 80% or more and preferably 90% or more include products named as "SBC818," "SPB608," "SBF0323HC," "STN7006," "SEB853," and "SPB681" manufactured by Braskem S.A., and films using these as raw materials can be suitably used.

Also known are films and sheets blended with starch as a biomass material and polylactic acid. These can be selected and used as appropriate in accordance with uses.

The biomass films may be laminates with a plurality of biomass films laminated or laminates of conventional petroleum-based films and biomass films. These biomass films may be either unoriented films or oriented films, and the method for producing them is also not limited.

The film may be subjected to stretching. As a method of orienting, it is general to melt and extrude resin into a sheet form by an extrusion film forming method or the like and then perform simultaneous biaxial stretching or sequential biaxial stretching. In the case of sequential biaxial stretching, it is general to perform longitudinal stretching first and then perform lateral stretching. Specifically, a combination of longitudinal stretching using speed difference between rolls and lateral stretching using a tenter is often used.

Various kinds of surface treatment such as flame treatment and corona discharge treatment may be applied to the film surface as needed so as to form an adhesive layer free from defects such as film breakage and bursting.

Alternatively, an inorganic vapor-deposited film such as a metal-deposited film with a metal layer such as aluminum deposited and a transparent vapor-deposited film with a vapor-deposited layer of a metal oxide such as silica or alumina laminated or a barrier film containing a gas barrier layer such as polyvinyl alcohol, ethylene-vinyl alcohol copolymer, or vinylidene chloride may be used. Using such a film allows the laminate to have barrier properties against water vapor, oxygen, alcohols, inert gases, volatile organic substances (fragrances), and the like.

As to paper, any known paper base materials can be used without any particular limitations. Specifically, paper is manufactured using natural fibers for papermaking such as wood pulp by a known papermaking machine, and the conditions for papermaking are not particularly specified. Examples of the natural fibers for papermaking include wood pulps such as softwood pulps and hardwood pulps, non-wood pulps such as Manila hemp pulp, sisal hemp pulp, and flax pulp, and pulps obtained by chemically modifying these pulps. As to the type of pulps, chemical pulps, ground pulps, chemiground pulps, and thermomechanical pulps made by sulfate digesting, acidic, neutral, or alkaline sulfite digesting, soda salt digesting, and the like can be used. Various commercially available fine paper, coated paper, backed paper, impregnated paper, cardboards, paperboards, and the like can also be used.

Configuration examples of the laminate include:
(1) base material 1/adhesive layer 1/sealant film,
(2) base material 1/adhesive layer 1/metal vapor-deposited non-oriented film,
(3) base material 1/adhesive layer 1/metal vapor-deposited oriented film,
(4) transparent vapor-deposited oriented film/adhesive layer 1/sealant film,
(5) base material 1/adhesive layer 1/base material 2/adhesive layer 2/sealant film,
(6) base material 1/adhesive layer 1/metal vapor-deposited oriented film/adhesive layer 2/sealant film,
(7) base material 1/adhesive layer 1/transparent vapor-deposited oriented film/adhesive layer 2/sealant film,
(8) base material 1/adhesive layer 1/metal layer/adhesive layer 2/sealant film,
(9) base material 1/adhesive layer 1/base material 2/adhesive layer 2/metal layer/adhesive layer 3/sealant film, and
(10) base material 1/adhesive layer 1/metal layer/adhesive layer 2/base material 2/adhesive layer 3/sealant film,
but these are not limiting.

Examples of the base material 1 used in the configuration (1) include MDOPE films, OPE films, OPP films, PET films, nylon films, and paper. The base material 1 may be provided with a coating for the purpose of improving gas barrier properties and ink receptivity when a printed layer described below is provided. Commercially available examples of the base film 1 provided with a coating include K-OPP film and K-PET film. The adhesive layer 1 is a cured coating film of the adhesive of the present invention. Examples of the sealant film include CPP films, LLDPE films, and gas barrier heat seal films. A printed layer may be provided on a face of the base material 1 closer to the adhesive layer 1 (when the base material film 1 provided with a coating is used, a face of the coating layer closer to the adhesive layer 1) or a face on the side opposite to the adhesive layer 1. The printed layer is formed by general printing methods that have conventionally been used for printing on polymer films and paper with various kinds of printing inks such as gravure inks, flexographic inks, offset inks, stencil inks, and inkjet inks.

Examples of the base material 1 used in the configurations (2) and (3) include MDOPE films, OPE films, OPP films, PET films, and paper. The adhesive layer 1 is a cured coating film of the adhesive of the present invention. As the metal vapor-deposited non-oriented film, a VM-CPP film, a VM-LLDPE film, or the like, in which metal vapor deposition such as aluminum is applied to a CPP film, an LLDPE film, or a gas barrier heat seal film, can be used, whereas as the metal vapor-deposited oriented film, a VM-MDOPE film, a VM-OPE film, or a VM-OPP film, in which metal vapor deposition such as aluminum is applied to an MDOPE film, an OPE film, or an OPP film, can be used. In the same way as the configuration (1), a printed layer may be provided on either face of the base material 1.

Examples of the transparent vapor-deposited oriented film used in the configuration (4) include films obtained by applying silica or alumina vapor deposition to MDOPE films, OPE films, OPP films, PET films, nylon films, or the like. For the purpose of protecting the inorganic vapor deposition layer of silica or alumina, a film provided with a coating on the vapor deposition layer may be used. The adhesive layer 1 is a cured coating film of the adhesive of the present invention. The sealant film can be the same as those of the configuration (1). A printed layer may be provided on a face of the transparent vapor-deposited oriented film closer to the adhesive layer 1 (when the inorganic vapor deposition layer provided with a coating is used, a face of the coating layer closer to the adhesive layer 1). The method for forming the printed layer is similar to that of the configuration (1).

Examples of the base material 1 used in the configuration (5) include PET films and paper. Examples of the base material 2 include nylon films. At least one of the adhesive layers 1 and 2 is a cured coating film of the adhesive of the present invention. The sealant film can be the same as those of the configuration (1). In the same way as the configuration (1), a printed layer may be provided on either face of the base material 1.

The base material 1 of the configuration (6) can be the same as those of the configurations (2) and (3). Examples of the metal vapor-deposited oriented film include VM-MDOPE films, VM-OPE films, VM-OPE films, VM-OPP films, and VM-PET films, in which metal vapor deposition such as aluminum is applied to MDOPE films, OPE films, OPP films, and PET films. At least one of the adhesive layers 1 and 2 is a cured coating film of the adhesive of the present invention. The sealant film can be the same as those of the configuration (1). In the same way as the configuration (1), a printed layer may be provided on either face of the base material 1.

Examples of the base material 1 of the configuration (7) include PET films and paper. The transparent vapor-deposited oriented film can be the same as those of the configuration (4). At least one of the adhesive layers 1 and 2 is a cured coating film of the adhesive of the present invention. The sealant film can be the same as those of the configuration (1). In the same way as the configuration (1), a printed layer may be provided on either face of the base material 1.

Examples of the base material 1 of the configuration (8) include PET films and paper. Examples of the metal layer include aluminum foil. At least one of the adhesive layers 1 and 2 is a cured coating film of the adhesive of the present invention. The sealant film can be the same as those of the configuration (1). In the same way as the configuration (1), a printed layer may be provided on either face of the base material 1.

Examples of the base material 1 of the configurations (9) and (10) include PET films and paper. Examples of the base material 2 include nylon films. Examples of the metal layer include aluminum foil. At least one layer of the adhesive layers 1, 2, and 3 is a cured coating film of the adhesive of the present invention. The sealant film can be the same as those of the configuration (1). In the same way as the configuration (1), a printed layer may be provided on either face of the base material 1.

The adhesive of the present invention has excellent initial cohesive force, and its reduction over time is suppressed. The aggregation of air bubbles caused by low initial cohesive force is suppressed, and thus laminates with excellent processed appearance can be obtained. Defects in processed appearance are likely to occur when at least one of the base materials to be bonded to each other is a relatively hard base material such as a PET film or a Ny film or when a base material having a vapor-deposited layer and metal foil are bonded to each other to produce a laminate. Thus, the adhesive of the present invention can be particularly suitably used for the production of such laminates.

Examples of specific configurations of such laminates include
PET film/adhesive layer/LLDPE film,
PET film/adhesive layer/CPP film,
PET film/adhesive layer/aluminum vapor-deposited CPP film,
transparent vapor-deposited PET film/adhesive layer/CPP film, and
Ny film/adhesive layer/LLDPE film.
Ny film/adhesive layer/CPP film,
OPP film/adhesive layer/aluminum vapor-deposited CPP film,
transparent vapor-deposited OPP film/adhesive layer/CPP film,
transparent vapor-deposited OPE film/adhesive layer/CPP film,
transparent vapor-deposited Ny film/adhesive layer/CPP film,
gas barrier polyolefin film/adhesive layer/CPP film,
gas barrier polyolefin film /adhesive layer/LLDPE film,
Ny film/aluminum vapor-deposited PET film/LLDPE film,
PET film/aluminum vapor-deposited PET film/LLDPE film,
PET film/aluminum vapor-deposited PET film/Ny film/LLDPE film,
PET film/Ny film/LLDPE film,
PET film/aluminum foil/CPP film,
PET film/aluminum foil/LLDPE film,
aluminum foil/PET film/LLDPE film,
PET film/AL/PET film/LLDPE film,
OPP film/aluminum vapor-deposited PET film/aluminum vapor-deposited EVOH film/LLDPE film, and antistatic Ny film/Ny film/aluminum foil/LLDPE film
are included. In the configurations exemplified above, the LLDPE film may be one colored white.

### <Method for Producing Laminate>

The laminate of the present invention is obtained by a method (non-solvent lamination) having a two-component mixing process in which the polyisocyanate composition (X) and the polyol composition (Y) are mixed together in advance and are then applied to a first base material, then a second base material is laminated to the applied face, and the adhesive layer is cured to be obtained or a method having a two-component separate application process in which the polyisocyanate composition (X) and the composition polyol (Y) are separately applied to the first base material and the second base material, respectively, then the applied faces are brought into contact with each other to be pressure-bonded to each other to laminate the first base film and the second base film on each another, and the adhesive layer is cured to be obtained, for example.

As another form of the two-component separate application, a mixture of the polyisocyanate composition (X) and a compound having active hydrogen groups is applied to one base material, the polyol composition (Y) is applied to the other base material, and then the applied faces are brought into contact with each other to be pressure-bonded to each other to laminate these base materials on each other, and the adhesive layer can be cured.

When the laminate of the present invention is produced by the method having a two-component mixing process, the application amount of the adhesive (a mixture of the polyisocyanate composition (X) and the polyol composition (Y)) is 0.5 to 5.0 g/m² as an example. When the laminate of the present invention is produced by the method having a two-component separate application process, the application amounts of the polyisocyanate composition (X) and the polyol composition (Y) are each preferably 0.3 to 3.0 g/m² and are more preferably used in about 0.3 to 2.0 g/m².

The method of pressure bonding is preferably a method bonding the two bases to each other while causing them to pass through between two rolls (laminate rolls) through pressure between the rolls; the temperature of the laminate rolls is preferably about room temperature to 80°C, whereas the pressure is preferably about 0.05 to 0.5 MPa.

Whichever method is used, when the two-component curable adhesive of the present invention is used, the adhesive cures to exhibit practical physical properties in 12 to 72 hours at room temperature (20 to 25°C) or under heating, or more specifically, 15 to 50°C after lamination.

The adhesive of the present invention has high reactivity and excellent initial cohesive force but tends to have a short pot life. Thus, the adhesive of the present invention is preferably used for the method having a two-component separate application process, in which such a problem is unlikely to occur.

### <Packaging Material>

The laminate described above can be suitably used as a packaging material, especially a packaging material for food packaging. The packaging material is made by forming the laminate described above into a bag shape and heat-sealing it to form the packaging material. The packaging material has various aspects such as three-side-seal bags, four-side-seal bags, gusset bags, pillow bags, Goebel-top-type bottomed containers, tetraclassic, Bruck type, tube containers, paper cups, and lidding materials. The packaging material may be applied with easy-open treatment or provided with resealable means as appropriate.

The packaging material of the present invention can be suitably used as packaging materials mainly for not to mention food and those filled with detergents and drugs. Examples of specific uses as detergents and drugs include liquid detergents for laundry, liquid detergents for kitchens, liquid detergents for baths, liquid soaps for baths, liquid shampoos, liquid conditioners, pharmaceutical tablets, intravenous dripping and blood transfusion packs, medical devices such as syringes, batteries, vacuum heat insulating materials, and precise components such as silicon wafers. The packaging material of the present invention can be used as secondary packaging materials packaging the containers.

### [Examples]

The following describes the present invention in more detail with reference to specific synthesis examples and examples; the present invention is not limited to these examples. In the following examples, "parts" and "%" represent "parts by mass" and "% by mass," respectively, unless otherwise noted.

### <Preparation of Polyisocyanate Composition (X)>

### (Polyisocyanate Composition (X-1))

Into a flask equipped with a stirrer, a thermometer, and a nitrogen gas introduction tube, 40.2 parts of 4,4-diphenylmethane diisocyanate (hereinafter, abbreviated as "MDI"), 10.0 parts of hexamethylene diisocyanate nurate form (hereinafter, abbreviated as "HDI nurate") were charged, and the mixture was stirred under nitrogen gas and was heated up to 60°C. A bifunctional polypropylene glycol (hereinafter, abbreviated as "PPG") with a number average molecular weight of 1,000 in an amount of 37.9 parts and 2.0 parts of 2,2,4-trimethyl-1,3-pentanediol were mixed together, and the mixture was further added dropwise to this flask in a few separate batches, and the mixture was stirred for 5 to 6 hours at 80°C to cause a urethane-forming reaction, thereby obtaining a polyisocyanate. The obtained polyisocyanate was mixed with 10.0 parts of carbodiimide-modified isocyanate to obtain a polyisocyanate composition (X-1). The obtained polyisocyanate composition (X-1) had an NCO% of 13.0% and a viscosity at 50°C of 1,500 mPa·s.

### (Polyisocyanate Composition (X-2))

Into a polyester reaction vessel equipped with a stirrer, a nitrogen gas introduction tube, a Snyder tube, and a condenser, 92.00 parts of ethylene glycol, 118.50 parts of phthalic anhydride, 29.23 parts of adipic acid, and 0.01 parts of titanium tetraisopropoxide were charged, and the mixture was gradually heated such that the temperature at the upper portion of a rectifying tube would not exceed 100°C to maintain the internal temperature at 220°C. When the acid value became 1 mgKOH/g or less, the esterification reaction was terminated to obtain a polyester intermediate B1' with a number average molecular weight of 500.

Into a reaction vessel equipped with a stirrer, a nitrogen gas introduction tube, a Snyder tube, a cooling condenser, and a dropping funnel, 71.45 parts of xylylene diisocyanate and 46.26 parts of Millionate MN (a mixture of 4,4'-diphenylmethane diisocyanate and 2,4'-diphenylmethane diisocyanate) were added, which were stirred while being heated to 70°C, to which 92.28 parts of the polyester intermediate B1' was added dropwise over 2 hours using the dropping funnel, and the mixture was further stirred for 4 hours to obtain a polyisocyanate composition (X-2). The polyisocyanate composition (X-2) had an NCO% of 15.1% and a viscosity at 50°C of 2,900 mPa·s.

### (Polyisocyanate Composition (X-3))

To a reaction vessel equipped with a stirrer, a thermometer, and a nitrogen gas introduction tube, 80.0 parts of a nurate form of hexamethylene diisocyanate (manufactured by Sumika Covestro Urethane Co., Ltd., Sumidur N3300) and 20.0 parts of a nurate form of isophorone diisocyanate (manufactured by EVONIK, VESTANAT T1890/100) were added, and the mixture was heated up to 130°C with stirring. Stirring was continued at 130°C until the contents became clear, and the temperature was lowered when they became clear to obtain a polyisocyanate composition (X-1). The polyisocyanate composition (X-3) had an NCO% of 20.9% and a viscosity at 50°C of 2,150 mPa·s.

### <Preparation of Polyol Composition (Y)>

Polyester polyols (B1-1) to (B1-3) and (E1-1) to (E1-3) were obtained as follows.

### (Synthesis of Polyester Polyol (B1-1))

Into a reaction vessel equipped with a stirrer, a thermometer, a nitrogen gas introduction tube, a rectifying tube, a moisture separator, and the like, 54.0 parts of 3-methyl pentanediol, 30.0 parts of trimethylolpropane, 60.0 parts of adipic acid, and 0.01 parts of titanium tetraisopropoxide were charged while introducing a nitrogen gas, and the mixture was gradually heated such that the temperature at the upper portion of the rectifying tube would not exceed 100°C to maintain the internal temperature at 220°C. When the acid value became 1 mgKOH/g or less, the esterification reaction was terminated to obtain a polyester polyol (B1-2) with a number average molecular weight of 500 and a hydroxy group value of 337.

### (Synthesis of Polyester Polyol (B 1-2))

Into a reaction vessel equipped with a stirrer, a thermometer, a nitrogen gas introduction tube, a rectifying tube, a moisture separator, and the like, 54.0 parts of 3-methyl pentanediol, 46.0 parts of isophthalic acid, and 0.01 parts of titanium tetraisopropoxide were charged while introducing a nitrogen gas, and the mixture was gradually heated such that the temperature at the upper portion of the rectifying tube would not exceed 100°C to maintain the internal temperature at 250°C. When the acid value became 1 mgKOH/g or less, the esterification reaction was terminated to obtain a polyester polyol (B1-1) with a number average molecular weight of 500 and a hydroxy group value of 224.

### (Synthesis of Polyester Polyol (B1-3))

Into a reaction vessel equipped with a stirrer, a thermometer, a nitrogen gas introduction tube, a rectifying tube, a moisture separator, and the like, 25.0 parts of 1.4-butanediol, 25.0 parts of 1,6-hexanediol, 58.0 parts of adipic acid, and 0.01 parts of titanium tetraisopropoxide were charged while introducing a nitrogen gas, and the mixture was gradually heated such that the temperature at the upper portion of the rectifying tube would not exceed 100°C to maintain the internal temperature at 220°C. When the acid value became 1 mgKOH/g or less, the esterification reaction was terminated to obtain a polyester polyol (B1-3) with a number average molecular weight of 1,000 and a hydroxy group value of 112.

### (Synthesis of Polyester Polyol (E1-1))

Into a reaction vessel equipped with a stirrer, a thermometer, a nitrogen gas introduction tube, a rectifying tube, a moisture separator, and the like, 45.0 parts of diethylene glycol, 50.0 parts of adipic acid, and 0.01 parts of titanium tetraisopropoxide were charged while introducing a nitrogen gas, and the mixture was gradually heated such that the temperature at the upper portion of the rectifying tube would not exceed 100°C to maintain the internal temperature at 220°C. When the acid value became 1 mgKOH/g or less, the esterification reaction was terminated to obtain a polyester polyol (B1-3) with a number average molecular weight of 1,000 and a hydroxy group value of 112.

### (Synthesis of Polyester Polyol (E1-2))

Into a reaction vessel equipped with a stirrer, a thermometer, nitrogen gas introduction tube, a rectifying tube, a moisture separator, and the like, 7.2 parts by mass of ethylene glycol, 15.8 parts by mass of diethylene glycol, 22.5 parts by mass of neopentyl glycol, 21.9 parts by mass of adipic acid, 4.6 parts by mass of sebacic acid, and 28.0 parts by mass of isophthalic acid were charged while introducing a nitrogen gas, and the mixture was gradually heated such that the temperature at the upper portion of the rectifying tube would not exceed 100°C to maintain the internal temperature at 240°C. When the acid value became 1 mgKOH/g or less, the esterification reaction was terminated to obtain a polyester polyol (E1-2) with a number average molecular weight of 700 and a hydroxy group value of 159.0 mgKOH/g.

### (Synthesis of Polyester Polyol (E1-3))

Into a reaction vessel equipped with a stirrer, a thermometer, a nitrogen gas introduction tube, a rectifying tube, a moisture separator, and the like, 92.0 parts by mass of ethylene glycol, 118.5 parts by mass of phthalic anhydride, 29.2 parts by mass of adipic acid, and 0.01 parts of titanium tetraisopropoxide were charged while introducing a nitrogen gas, and the mixture was gradually heated such that the temperature at the upper portion of the rectifying tube would not exceed 100°C to maintain the internal temperature at 250°C. When the acid value became 1 mgKOH/g or less, the esterification reaction was terminated to obtain a polyester polyol (E1-3) with a number average molecular weight of 500 and a hydroxy group value of 224.

Polyol compositions (Y-1) to (Y-10) and (Y'-1) to (Y'-6) were prepared in accordance with the formulations listed in Tables 1 to 3. The unit of the amine value is mgKOH/g. The details of the compounds in the tables are as follows.
Polyester polyol (B2-1): polycaprolactone polyol (manufactured by Daicel Corporation, Placcel 205U (molecular weight: 530, hydroxy group value: 212), Polyether polyol (C1-1): polypropylene polyol (manufactured by AGC Inc., Excenol 1030 (molecular weight = 1,000, hydroxy group value = 160))
Polyether polyol (C1-2): polypropylene polyol (manufactured by AGC Inc., Excenol 420 (molecular weight = 400, hydroxy group value = 280))
Polyether polyol (C1-3): polypropylene polyol (manufactured by AGC Inc., Excenol 430 (molecular weight = 400, hydroxy group value = 400))
Polyether polyol (C1-4): polypropylene polyol (manufactured by Sanyo Chemical Industries, Ltd., Sannix HD-402 (molecular weight = 600, hydroxy group value = 404)
Polyamine (D-1): polyoxypropylenetriamine (manufactured by Huntsman, Jeffamine T-403, molecular weight = 440, amine value = 355 mgKOH/g)
Polyamine (D-2): polyoxypropylenediamine (manufactured by Huntsman, Jeffamine D-2000, molecular weight = 2,000, amine value = 56 mgKOH/g)

**[Table 1]**

| | Y-1 | Y-2 | Y-3 | Y-4 | Y-5 |
|---|---|---|---|---|---|
| Polyester polyol (B1-1) | 25.00 | 25.00 | 25.00 | 8.00 | 30.00 |
| Polyester polyol (B1-2) | | | | | 30.00 |
| Polyester polyol (B1-3) | | | | | |
| Polyester polyol (B2-1) | | | | | |
| Polyether Polyol (C1-1) | 13.70 | 13.00 | 20.00 | 13.00 | |
| Polyether polyol (C1-2) | 40.00 | 37.30 | 45.30 | 54.30 | 10.00 |
| Polyether polyol (C1-3) | | | | | 12.90 |
| Polyether polyol (C1-4) | 9.50 | 4.90 | 4.90 | 4.90 | |
| Polyamine (D-1) | 9.00 | 17.00 | 2.00 | 17.00 | 17.00 |
| Polyamine (D-2) | | | | | |
| Dimethylolpropionic acid | 0.90 | 0.90 | 0.90 | 0.90 | |
| ε-Caprolactam | 0.90 | 0.90 | 0.90 | 0.90 | |
| Dibutyltin dilaurate | | | | | 0.10 |
| Zinc neodecanoate | 0.50 | 0.50 | 0.50 | 0.50 | |
| Bismuth neodecanoate | 0.50 | 0.50 | 0.50 | 0.50 | |
| 3-Glycidoxypropyltrimethoxysilane | | | | | |
| 3-Aminopropyltriethoxysilane | | | | | |
| Total | 100.00 | 100.00 | 100.00 | 100.00 | 100.00 |
| Amine value (mgKOH/g) | 32.1 | 60.7 | 7.1 | 60.7 | 60.7 |

**[Table 2]**

| | Y-6 | Y-7 | Y-8 | Y-9 | Y-10 |
|---|---|---|---|---|---|
| Polyester polyol (B1-1) | | | | | |
| Polyester polyol (B1-2) | 30.00 | 30.00 | | | 30.00 |
| Polyester polyol (B1-3) | | | 30.00 | | |
| Polyester polyol (B2-1) | | | | 30.00 | |
| Polyether polyol (C1-1) | | | | | |
| Polyether polyol (C1-2) | 40.00 | 40.00 | 40.00 | 40.00 | 23.00 |
| Polyether polyol (C1-3) | 10.20 | 10.90 | 10.90 | 10.90 | 10.90 |
| Polyether polyol (C1-4) | | | | | |
| Polyamine (D-1) | 17.00 | 17.00 | 17.00 | 17.00 | |
| Polyamine (D-2) | | | | | 34.00 |
| Dimethylolpropionic acid | 0.90 | | | | |
| ε-Caprolactam | 0.90 | | | | |
| Dibutyltin dilaurate | | 0.10 | 0.10 | 0.10 | 0.10 |
| Zinc neodecanoate | 0.50 | | | | |
| Bismuth neodecanoate | 0.50 | | | | |
| 3-Glycidoxypropyltrimethoxysilane | | 1.00 | 1.00 | 1.00 | 1.00 |
| 3-Aminopropyltriethoxysilane | | 1.00 | 1.00 | 1.00 | 1.00 |
| Total | 100.00 | 100.00 | 100.00 | 100.00 | 100.00 |
| Amine value (mgKOH/g) | 60.7 | 60.7 | 60.7 | 60.7 | 19.0 |

**[Table 3]**

| | Y'-1 | Y'-2 | Y'-3 | Y'-4 | Y'-5 | Y'-6 |
|---|---|---|---|---|---|---|
| Polyester polyol (B1-1) | | | | | | 25.00 |
| Polyester polyol (E1-1) | | 30.00 | | | | |
| Polyester polyol (E1-2) | | | 30.00 | | | |
| Polyester polyol (E1-3) | | | | 30.00 | 30.00 | |
| Castor oil (E2) | 46.00 | | | | | |
| Polyether polyol (C1-1) | | | | | | 23.00 |
| Polyether polyol (C1-2) | 42.60 | 40.00 | 40.00 | 40.00 | 23.00 | 40.00 |
| Polyether polyol (C1-3) | | 12.90 | 12.90 | 12.90 | 12.90 | |
| Polyether polyol (C1-4) | | | | | | 10.00 |
| Polyamine (D-1) | 9.00 | 17.00 | 17.00 | 17.00 | | |
| Polyamine (D-2) | | | | | 34.00 | |
| Dimethylolpropionic acid | | | | | | |
| ε-Caprolactam | 0.90 | | | | | 0.90 |
| Dibutyltin dilaurate | | 0.10 | 0.10 | 0.10 | 0.10 | |
| Zinc neodecanoate | 1.00 | | | | | 0.50 |
| Bismuth neodecanoate | | | | | | |
| 3 -Glycidoxypropyltrimethoxy silane | 0.50 | | | | | |
| 3-Aminopropyltriethoxysilane | | | | | | 0.60 |
| Total | 100.00 | 100.00 | 100.00 | 100.00 | 100.00 | 100.00 |
| Amine value (mgKOH/g) | 32.1 | 60.7 | 60.7 | 60.7 | 19.0 | 0.0 |

### <Production of Printed Product>

Urethane-based laminate ink (Finart R794 White G3; manufactured by DIC Corporation) was adjusted to 15 seconds (25°C) with Zahn Cup #3 manufactured by Rigo Co., Ltd., was printed on a corona-treated polyethylene terephthalate (PET) film (Toyobo Ester Film E5102#12) at a printing speed of 150 m/minute by a gravure printing machine equipped with a gravure plate with a plate depth of 43 µm, and was dried or cured by being passed through an oven at 70°C to form a printed layer on the PET film.

### <Evaluation>

### (Processed Appearance (Use of Sample before Storage))

The polyisocyanate composition (X-1) was applied to the surface of the printed layer printed on the PET film, and the polyol composition (Y-1) was applied to the aluminum vapor-deposited face of an aluminum vapor-deposited polypropylene film (VMCPP, manufactured by Toray Advanced Film Co., Ltd., 2703, 25 µm), and the PET film and the VMCPP film were pressure-bonded to each other by nip rolls (50°C) to obtain a sample for evaluation of Example 1 of PET film/adhesive layer/VMCPP film. The application amounts of the polyisocyanate composition (X-1) and the polyol composition (Y-1) were 1.3 g/m² and 0.7 g/m², respectively. The application speed of the polyisocyanate composition (X-1) and the polyol composition (Y-1) was set to 250 m/minute.

Samples for evaluation of Example 1 were produced in the same manner except that the application speed of the polyisocyanate composition (X-1) and the polyol composition (Y-1) was changed to 200 m/minute, 150 m/minute, and 100 m/minute.

Samples for evaluation of examples and comparative examples were obtained in the same manner as in Example 1 except that the polyisocyanate composition (X) and the polyol composition (Y) used and their application amounts were changed as listed in Tables 4 to 6.

From the PET film side of the sample for evaluation, the deposition face was visually observed through the printed layer and the adhesive layer and was evaluated based on the following criteria.
5: Air bubbles with a maximum diameter of 0.1 mm or more are not observed even at an adhesive application speed of 250 m/minute.
4: Air bubbles with a maximum diameter of 0.1 mm or more are not observed even at an adhesive application speed of 200 m/minute.
3: Air bubbles with a maximum diameter of 0.1 mm or more are not observed even at an adhesive application speed of 150 m/minute.
2: Air bubbles with a maximum diameter of 0.1 mm or more are not observed even at an adhesive application speed of 100 m/minute.
1: Air bubbles with a maximum diameter of 0.1 mm or more are observed even at an adhesive application speed of 100 m/minute.

### (Processed Appearance (Use of Sample after Storage))

The polyol composition (Y) was encapsulated in a can while introducing a nitrogen gas and was stored under a heated condition at 50°C for 4 weeks. Samples for evaluation were produced and evaluated under the same conditions as for the processed appearance (use of sample before storage) except that the polyol composition (Y) after storage was used.

### (Laminate Strength)

The polyisocyanate composition (X-1) was applied to the surface of the printed layer printed on the PET film, and the polyol composition (Y-1) was applied to the aluminum vapor-deposited face of an aluminum vapor-deposited polypropylene film (VMCPP, manufactured by Toray Advanced Film Co., Ltd., 2703, 25 µm), and the PET film and the VMCPP film were pressure-bonded to each other by nip rolls (50°C) to obtain a sample for evaluation of Example 1 of PET film/adhesive layer/VMCPP film. The application amounts of the polyisocyanate composition (X-1) and the polyol composition (Y-1) were 1.3 g/m² and 0.7 g/m², respectively. The application speed of the polyisocyanate composition (X-1) and the polyol composition (Y-1) was set to 250 m/minute.

Samples for evaluation of examples and comparative examples were obtained in the same manner as in Example 1 except that the polyisocyanate composition (X) and the polyol composition (Y) used and their application amounts were changed as listed in Tables 4 to 6.

The samples for evaluation were cut into a piece that is 300 mm long and 15 mm wide, and T-type peel strength was measured at 15 mm wide by pulling at a peel rate of 300 mm/minute under a 25°C environment using a tensile tester manufactured by Instron. This test was conducted five times, and the average value was determined and evaluated based on the following criteria.
5: 1.5 N/15 mm or more
4: 1.0 N/15 mm or more and less than 1.5 N/15 mm
3: 0.5 N/15 mm or more and less than 1.0 N/15 mm
2: 0.2 N/15 mm or more and less than 0.5 N/15 mm
1: less than 0.2 N/15 mm

**[Table 4]**

| | Example 1 | Example 2 | Example 3 | Example 4 | Example 5 |
|---|---|---|---|---|---|
| Polyisocyanate composition (X-1) | 1.3 | 1.3 | 1.3 | 1.3 | 1.3 |
| Polyisocyanate composition (X-2) | | | | | |
| Polyisocyanate composition (X-3) | | | | | |
| Polyol composition (Y-1) | 0.7 | | | | |
| Polyol composition (Y-2) | | 0.7 | | | |
| Polyol composition (Y-3) | | | 0.7 | | |
| Polyol composition (Y-4) | | | | 0.7 | |
| Polyol composition (Y-5) | | | | | 0.7 |
| Processed appearance (before storage) | 4 | 5 | 3 | 5 | 5 |
| Processed appearance (after storage) | 4 | 5 | 3 | 5 | 5 |
| Laminate strength | 5 | 5 | 5 | 4 | 4 |

**[Table 5]**

| | Example 6 | Example 7 | Example 8 | Example 9 | Example 10 |
|---|---|---|---|---|---|
| Polyisocyanate composition (X-1) | | | | | |
| Polyisocyanate composition (X-2) | 1.4 | | 1.4 | | |
| Polyisocyanate composition (X-3) | | 1.2 | | 1.2 | 1.2 |
| Polyol composition (Y-6) | 0.6 | | | | |
| Polyol composition (Y-7) | | 0.8 | | | |
| Polyol composition (Y-8) | | | 0.8 | | |
| Polyol composition (Y-9) | | | | 0.8 | |
| Polyol composition (Y-10) | | | | | 0.8 |
| Processed appearance (before storage) | 5 | 5 | 5 | 5 | 4 |
| Processed appearance (after storage) | 5 | 5 | 5 | 5 | 4 |
| Laminate strength | 5 | 5 | 5 | 5 | 5 |

**[Table 6]**

| | Comp. Example 1 | Comp. Example 2 | Comp. Example 3 | Comp. Example 4 | Comp. Example 5 | Comp. Example 6 |
|---|---|---|---|---|---|---|
| Polyisocyanate composition (X-1) | 1.3 | 1.3 | 1.4 | 1.4 | 1.3 | 1.3 |
| Polyisocyanate composition (X-2) | | | | | | |
| Polyisocyanate composition (X-3) | | | | | | |
| Polyol composition (Y'-1) | 0.7 | | | | | |
| Polyol composition (Y'-2) | | 0.7 | | | | |
| Polyol composition (Y'-3) | | | 0.6 | | | |
| Polyol composition (Y'-4) | | | | 0.6 | | |
| Polyol composition (Y'-5) | | | | | 0.7 | |
| Polyol composition (Y'-6) | | | | | | 0.7 |
| Processed appearance (before storage) | 3 | 5 | 5 | 5 | 4 | 1 |
| Processed appearance (after storage) | 1 | 1 | 1 | 1 | 1 | 1 |
| Laminate strength | 3 | 5 | 5 | 5 | 5 | 5 |

## Claims

1. A two-component curable adhesive comprising:
an isocyanate composition (X) containing a polyisocyanate compound (A); and
a polyol composition (Y) containing a polyester polyol (B), a compound (C) containing a polyoxyalkylene chain and a hydroxy group, and a polyamine (D),
the polyester polyol (B) being at least one selected from the group consisting of a polyester polyol (B1) being a reaction product of a polyvalent carboxylic acid and a polyhydric alcohol, with 90% by mass or more of the polyhydric alcohol being an aliphatic diol with number of carbon atoms of an alkyl chain linking two hydroxy groups with each other being four or more and 10 or less and a polycaprolactone polyol (B2), and
a ratio of a total amount of the polyester polyol (B), the compound (C), and the polyamine (D) to a solid content of the polyol composition (Y) being 90% by mass or more.

2. The two-component curable adhesive according to claim 1, wherein the polyol composition (Y) has an amine value of 1 mgKOH/g or more and 100 mgKOH/g or less.

3. The two-component curable adhesive according to claim 1, wherein a ratio of the polyester polyol (B) to the solid content of the polyol composition (Y) is 10 to 80% by mass.

4. The two-component curable adhesive according to claim 1, wherein a ratio of the compound (C) to the solid content of the polyol composition (Y) is 15 to 80% by mass.

5. The two-component curable adhesive according to claim 1, wherein the polyol composition (Y) has a viscosity at 50°C of 50 mPa·s or more and 500 mPa·s or less.

6. The two-component curable adhesive according to claim 1, wherein the isocyanate composition (X) has a viscosity at 50°C of 300 mPa·s or more and 10,000 mPa·s or less.

7. The two-component curable adhesive according to claim 1, wherein
the adhesive contains an organometal-based catalyst, and
a blending amount of the organometal-based catalyst is 0.005% by mass or more and 1.0% by mass or less of an entire amount of the adhesive.

8. A laminate comprising:
a first base material;
a second base material; and
an adhesive layer bonding the first base material and the second base material to each other,
the adhesive layer being a cured coating film of the two-component curable adhesive according to any one of claims 1 to 7.

9. A packaging material comprising the laminate according to claim 8.

## Patentansprüche

1. Härtbarer Zweikomponentenklebstoff, umfassend:
eine Isocyanatzusammensetzung (X), die eine Polyisocyanatverbindung (A) enthält; und
eine Polyolzusammensetzung (Y), die ein Polyesterpolyol (B), eine Verbindung (C), die eine Polyoxyalkylenkette und eine Hydroxylgruppe enthält, und ein Polyamin (D) enthält,
wobei das Polyesterpolyol (B) mindestens eine Verbindung ist, ausgewählt aus der Gruppe bestehend aus einem Polyesterpolyol (B1), das ein Reaktionsprodukt einer mehrwertigen Carbonsäure und eines mehrwertigen Alkohols ist, wobei 90 Massenprozent oder mehr des mehrwertigen Alkohols ein aliphatisches Diol mit einer Anzahl von Kohlenstoffatomen der Alkylkette, die zwei Hydroxylgruppen miteinander verbindet, von vier oder mehr und 10 oder weniger ist, und einem Polycaprolactonpolyol (B2), und
wobei das Verhältnis der Gesamtmenge des Polyesterpolyols (B), der Verbindung (C) und des Polyamins (D) zum Feststoffgehalt der Polyolzusammensetzung (Y) 90 Massenprozent oder mehr beträgt.

2. Härtbarer Zweikomponentenklebstoff nach Anspruch 1, wobei die Polyolzusammensetzung (Y) einen Aminwert von 1 mgKOH/g oder mehr und 100 mgKOH/g oder weniger aufweist.

3. Härtbarer Zweikomponentenklebstoff nach Anspruch 1, wobei das Verhältnis des Polyesterpolyols (B) zum Feststoffgehalt der Polyolzusammensetzung (Y) 10 bis 80 Massenprozent beträgt.

4. Härtbarer Zweikomponentenklebstoff nach Anspruch 1, wobei das Verhältnis der Verbindung (C) zum Feststoffgehalt der Polyolzusammensetzung (Y) 15 bis 80 Massenprozent beträgt.

5. Härtbarer Zweikomponentenklebstoff nach Anspruch 1, wobei die Polyolzusammensetzung (Y) eine Viskosität bei 50 °C von 50 mPa·s oder mehr und 500 mPa·s oder weniger aufweist.

6. Härtbarer Zweikomponentenklebstoff nach Anspruch 1, wobei die Isocyanatzusammensetzung (X) eine Viskosität bei 50 °C von 300 mPa·s oder mehr und 10.000 mPa·s oder weniger aufweist.

7. Härtbarer Zweikomponentenklebstoff nach Anspruch 1, wobei
der Klebstoff einen Katalysator auf Organometallbasis enthält und
die Beimischungsmenge des Katalysators auf Organometallbasis 0,005 Massenprozent oder mehr und 1,0 Massenprozent oder weniger der Gesamtmenge des Klebstoffs beträgt.

8. Laminat, umfassend:
ein erstes Basismaterial;
ein zweites Basismaterial; und
eine Klebeschicht, die das erste Basismaterial und das zweite Basismaterial miteinander verbindet,
wobei die Klebeschicht ein ausgehärteter Beschichtungsfilm des härtbaren Zweikomponentenklebstoffs nach einem der Ansprüche 1 bis 7 ist.

9. Verpackungsmaterial, das das Laminat nach Anspruch 8 umfasst.

## Revendications

1. Adhésif bi-composant durcissable comprenant :
une composition d'isocyanate (X) contenant un composé polyisocyanate (A) ; et
une composition de polyol (Y) contenant un polyester-polyol (B), un composé (C) contenant une chaîne polyoxyalkylène et un groupe hydroxy, et une polyamine (D),
le polyester-polyol (B) étant au moins un composé choisi dans le groupe constitué d'un polyester-polyol (B1) qui est un produit de réaction d'un acide carboxylique polyvalent et d'un alcool polyhydrique, 90 % en masse ou plus de l'alcool polyhydrique étant un diol aliphatique dont le nombre d'atomes de carbone de la chaîne alkyle reliant deux groupes hydroxy entre eux est de 4 ou plus et de 10 ou moins, et d'un polycaprolactone-polyol (B2), et
le rapport entre la quantité totale du polyester polyol (B), du composé (C) et de la polyamine (D) et la teneur en solides de la composition de polyol (Y) étant de 90 % en masse ou plus.

2. Adhésif bi-composant durcissable selon la revendication 1, dans lequel la composition de polyol (Y) présente un indice d'amine compris entre 1 mgKOH/g et 100 mgKOH/g.

3. Adhésif bi-composant durcissable selon la revendication 1, dans lequel le rapport entre le polyester-polyol (B) et la teneur en solides de la composition de polyol (Y) est compris entre 10 et 80 % en masse.

4. Adhésif bi-composant durcissable selon la revendication 1, dans lequel le rapport entre le composé (C) et la teneur en solides de la composition de polyol (Y) est compris entre 15 et 80 % en masse.

5. Adhésif bi-composant durcissable selon la revendication 1, dans lequel la composition de polyol (Y) présente une viscosité à 50 °C comprise entre 50 mPa·s et 500 mPa·s.

6. Adhésif bi-composant durcissable selon la revendication 1, dans lequel la composition d'isocyanate (X) présente une viscosité à 50 °C comprise entre 300 mPa·s et 10 000 mPa·s.

7. Adhésif bi-composant durcissable selon la revendication 1, dans lequel
l'adhésif contient un catalyseur organométallique, et
la quantité incorporée du catalyseur organométallique est comprise entre 0,005 % en masse et 1,0 % en masse de la quantité totale de l'adhésif.

8. Stratifié comprenant :
un premier matériau de base ;
un deuxième matériau de base ; et
une couche adhésive liant le premier matériau de base et le deuxième matériau de base l'un à l'autre,
la couche adhésive étant un film de revêtement durci de l'adhésif bi-composant durcissable selon l'une quelconque des revendications 1 à 7.

9. Matériau d'emballage comprenant le stratifié selon la revendication 8.
